# EUROPEAN PATENT SPECIFICATION

(11) **EP 0 421 554 B1**
(45) Date of publication and mention of the grant of the patent: **25.01.1995**
(21) Application number: 90202653.3
(22) Date of filing: 04.10.1990
(51) Int. Cl.: B60P 7/04, B60J 7/06

(54) **Foldable hood for a loading bed**
Faltbares Verdeck für eine Ladefläche
Capote pliable pour une platforme de chargement

(30) Priority: 04.10.1989 NL 8902467
(43) Date of publication of application: 10.04.1991
(73) Proprietor: IPCO B.V., Ottoland (NL)
(72) Inventor: Van de Graaf, Leonardus, NL-3316 BB Dordrecht (NL)
(74) Representative: Hoorweg, Petrus Nicolaas

(56) References cited:
- DE-A- 3 025 758
- DE-A- 3 039 102
- DE-U- 8 119 656
- FR-A- 2 567 464
- GB-A- 2 074 511
- GB-A- 2 209 311
- SE-B- 457 522

## Description

The invention relates to a foldable hood for a loading bed, for example on goods vehicles, trailers and the like, which hood comprises at least two rows of posts arranged at the side of the bed, a longitudinal beam connecting the top ends of the posts in a row, cross beams extending close to the level of the longitudinal beams and a layer of pliable material stretched over the cross and longitudinal beams as well as the posts, said pliable layer being provided with a first horizontal cover portion extending over the cross and longitudinal beams, and one or more vertical side parts extending along the posts, said cover part being fixed to the cross beams, wherein between each pair of adjacent cross beams at least one pair of pivoting arms is arranged, the pivot of which is supported by a carrier slidably mounted on a guide rail of said longitudinal beam, and wherein said guide rail for the carriages is elongated with a vertically extending portion.

Such foldable hoods are known in many embodiments, wherein, however, the hood usually has to be removed in its entirety in order to reach the load on the loading bed. This must be possible either by means of a fork lift truck at the side of the loading bed or by means of an overhead crane or the like at the top. Particularly in the case of goods vehicles wherein the removal and re-arrangement of the hood must take place frequently this is very time-consuming. Such a foldable hood is known from FR-A-2567464. However, the weight of a folded hood even as made from light-weight material is considerable and therefore it asks for a high power to bring the hood back from the folded position to the extended position.

The invention has for its object to obviate the above mentioned drawbacks by providing a foldable hood, wherein the loading bed becomes very easily accessible from all sides and can nevertheless be rapidly recovered for protection against weather influences.

The foldable hood according to the invention is distinguished in that a displaceable stop is arranged along the elongated vertical portion, said stop being provided with a weight compensating system.

Owing to the elongated vertically extending guide rail it is possible to slide the foldable hood entirely to the side of the loading floor. The vertically position of the hood is determined by said stop slidable along the guide rail, said weight of the foldable hood being compensated, preferably by means of a cylinder. This cylinder is preferably a gas spring cylinder.

Further, by separating the foldable hood into a cover part and separate side parts these can be operated mutually independently of each other, whereby on the one hand the required side part can easily be opened to allow fork lift trucks and the like access to the load and wherein on the other hand only the cover part has to be removed in order to be able to place or take out the load by means of hoisting cranes and the like.

To obtain a better guiding there is arranged a pivot system between each two adjacent cross beams, which system consists in the preferred embodiment of two strips which are fixed at the one end to the cross beam and at the other end to a carrier slidable in the rail. To obtain a motor-driven sliding system for the cover part of the foldable hood one of the carriers can be fixed to a flexible element, for instance cord, which has for instance the form of an endless chain.

Through use of one central adjusting motor, which drives a drive wheel via a transmission, a particularly simple embodiment is obtained.

Owing to the relatively stiff top beam it is possible to take away one or more of the posts at the side so that large loads can also be removed via the side after removal of one or more posts. The load lying beneath the foldable hood remains protected against weather influences, however, since the cover part can remain in place in the stretched position, wherein only the side parts need be removed.

The invention is further elucidated in the following figure description of an embodiment. In the drawing:
figure 1 shows a perspective rear view of a trailer provided with a loading bed having a foldable hood according to the invention arranged thereon;
figure 2 is a side view of the upper part of the foldable hood of figure 1;
figure 3 is a perspective view corresponding to figure 1 of a portion of the upper part of the foldable hood, on enlarged scale;
figure 4 is a perspective view corresponding to figure 3 of another portion of the foldable hood of figure 1, likewise on enlarged scale;
figures 5 and 6 show respectively a perspective top view and a side view of a modified front portion of the foldable hood according to the invention;
figure 7 is a view corresponding to figure 6 of an alternative embodiment.

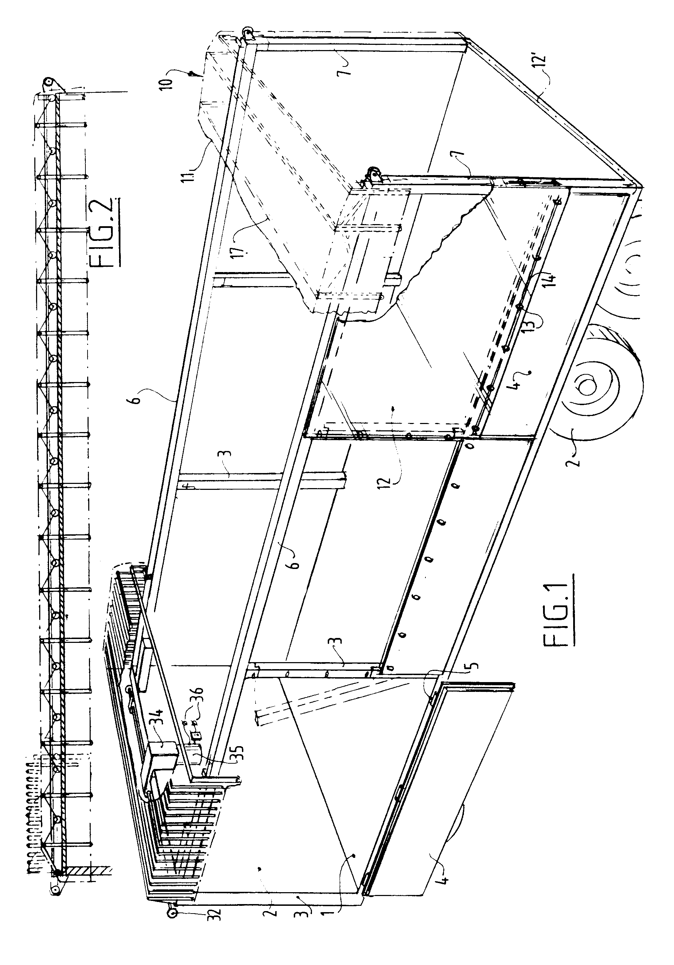

The trailer shown in figure 1 is of conventional construction and has a loading bed 1 which is supported by a frame (not shown) and on which a pair of wheels 2 is suspended, wherein it is assumed that the front part either has a travel wheel or a support for coupling to a tractive unit or the like.

Arranged on the front of the loading bed 1 is a panel 2 which can be manufactured from any random material and is for instance made of wood. Along the lengthwise edges of the loading bed 1 is arranged a number of posts 3, four of which are disposed in a row on each side. Arranged along the periphery of the loading bed 1 are also a number of flaps 4 which can be folded by means of hinges 5 from an opened position as on the left in figure 1 to a closed position as on the right in figure 1, whereby the loading area can be bounded on all sides. Fixed along the top ends of the posts 3 is a longitudinal beam 6 which extends parallel to the lengthwise edge of the loading bed 1. The front end of the longitudinal beam 6 is fixed to the front panel 2 and the rear end of the beam is attached to a fixed post 7.

The longitudinal beams and posts serve as a framework for a layer of pliable material 10 to be arranged thereon, a portion of which is drawn in the closed position on the right in figure 1. The layer of pliable material 10 is divided into a first horizontal part 11 which extends on the top side of the framework formed by the posts 3 and longitudinal beams 6, and a second part 12 which is oriented vertically and can be fastened in random manner to the longitudinal beams 6 and the posts 3. The rear side can be closed off by a vertical portion 12' which is an extension of the first part 11.

Fastening can be such that the side part 12 or rear portion 12' can be rolled up and fastened in the rolled-up position by means of belts in order to remove the vertical part for loading and unloading purposes.

On the bottom edge the pliable layer of material 12 can be fastened for instance to the loading flap 4 by means of eyelets 13 and threading cord 14. Other ways of fastening, for instance curtain systems, can of course also be used depending on the length of the loading area, and the purpose, that is, the type of load for which the loading area is used.

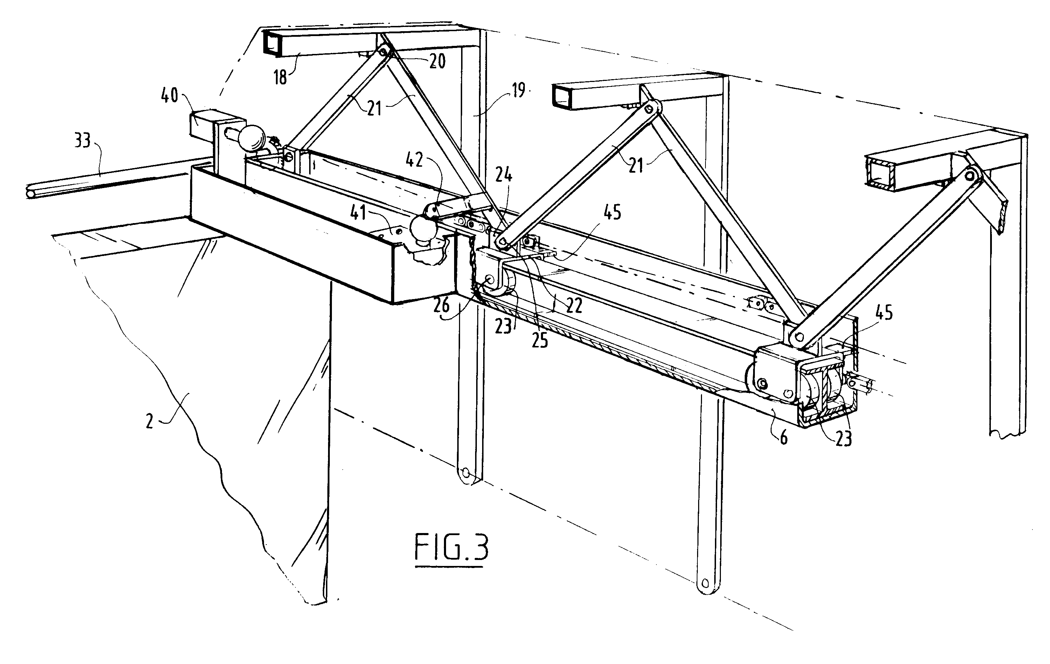

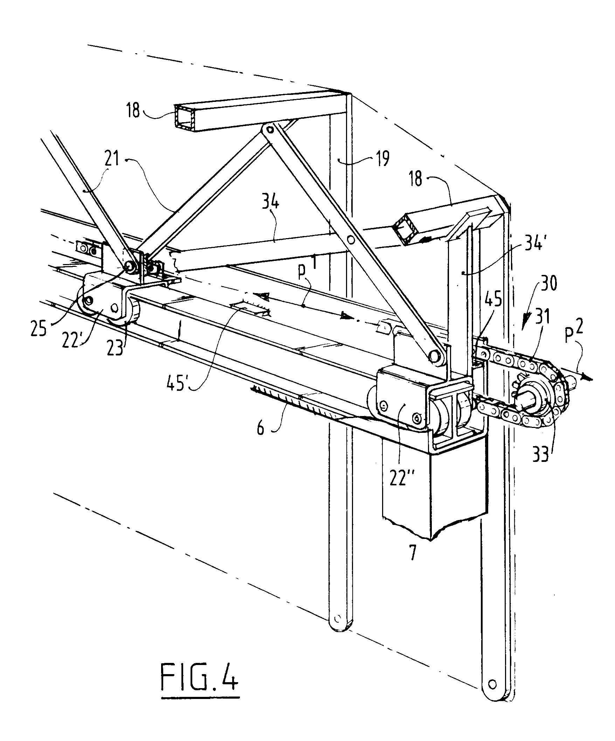

A special feature of the invention is that the horizontal first cover part 11 is supported by a number of cross beams 17, which in the embodiment shown consists of a horizontal portion of tube profile 18, see figures 3 and 4, in addition to a vertically oriented portion on either side of the tube profile 18 which can be made from a strip of material 19. The cover part 11 can be stretched over the cross beam 17 thus formed into a U, wherein the downward pointing vertical edge portion extends over the upper edge of the vertical parts 12.

Close to its end each cross beam or tube profile 18 is joined fixedly to one of two folding arms 21 that are mutually pivotable at 20 and point away from one another from the tube profile 18. The pivot point 20 is chosen such that a maximal angle of divergence of the arms can be obtained in stable position. The other end of the pivoting arm 21 is pivotally attached to a carriage 22 provided with two pairs of travel wheels 23 whereof the rotation shafts lie in line with one another.

For this purpose the carriage 22 is substantially U-shaped, wherein the body portion is provided with a standing support 24 wherein is received the hinge pin 25 for the pivotal attachment to the pivoting arms 21. The legs of the U are provided with means for receiving the rotation shafts 26 of the pairs of travel wheels 23.

The longitudinal beam 6 has the form of a U-profile with the opening to the top. The base plate of the U-profile 6 bears a rail in the form of an I-profile 27, this such that the wheels 23 are guided on either side in the channel-like portions of the I-profile.

For sliding the cross beams 17 back and forth along the rail in the longitudinal beam 6 a chain drive can be used which is indicated with the numeral 30. This chain drive consists of an endless chain 31 which is trained at the front about a chain wheel 32 and at the rear around a chain wheel 32' displaceable in the direction of the arrow P2 in order to be able to tension the chain.

The chain wheel 32 is connected to a shaft 33 which leads to a transmission 34 of an electromotor 35 which can be fed via connecting cables 36 by the battery of for instance a tractive unit.

The shaft 33 and therefore the chain wheel 32 can be set into rotation by the motor 35 whereby the chain 31 can be carried reciprocally in the direction of the arrow P1.

The penultimate carriage 22' is fixed to the top part of the chain 31 by any suitable means, see figure 4.

Due to its movement back or forth and by means of the pivoting arms 21, the penultimate carriage 22' will on the one hand pull along the other cross beams 18 behind it over the longitudinal beams 6 and the loading floor 1 or on the other hand push up the cross beams one by one from the closed position on the right in figure 1 to the open position on the left in figure 1.

The final carriage 22'' is connected via a folding link system 34 to the penultimate carriage 22'. The maximum position of divergence is reached when the long arm of the folding link system 34 falls into a support fork at the top end of vertical arm 34' of the last carriage 22''.

Control of the motor 35 can take place via end switches 40 and 41 which are operated by a protruding member 42 which is fixed to the second arm 21 and which in the spread position as in figure 3 depresses the switch 41 and therefore switches off the motor drive, in which position the penultimate carriage 22' has arrived at the end position of the rail 27. When the cross beams 18 are carried back the arm 42 comes into contact with the switch 40 whereby the motor can be switched off in good time for further transport.

It will be apparent from the above description that the loading floor 1 can be reached in diverse ways, on the one hand via the top by moving away the horizontal cover part 11 by means of starting the motor 35 and therefore pushing up the cross beams 18 and the pliable cover material to a concertina form in the above described manner, and on the other hand via the sides by removing the vertical side parts 12 and 12'.

In order to enlarge the passage at the side, subject to the material for loading, one or more successive posts 3 between the longitudinal beam 6 and the loading floor 1 can be removed, which removal construction can be embodied in random manner. Owing to the relatively heavy U-shaped longitudinal beam 6 there is no risk of deformation of the longitudinal beam 6 despite removal of the posts 3, whereby removal and arranging of the horizontal cover part 11 can continue to take place without problem.

Finally, it is noted that the friction of the chain 30 in the U-shaped longitudinal beam 6 can be lessened by embodying each carriage 22 with a chain support 45 whereover the freely suspended upper part of the chain 30 is guided.

For the same purpose the inside of the standing leg of the U-profile is provided at regular intervals with similar chain supports 45'. This prevents contact between the upper and lower parts of the chain and therefore a decrease in the friction generated thereby.

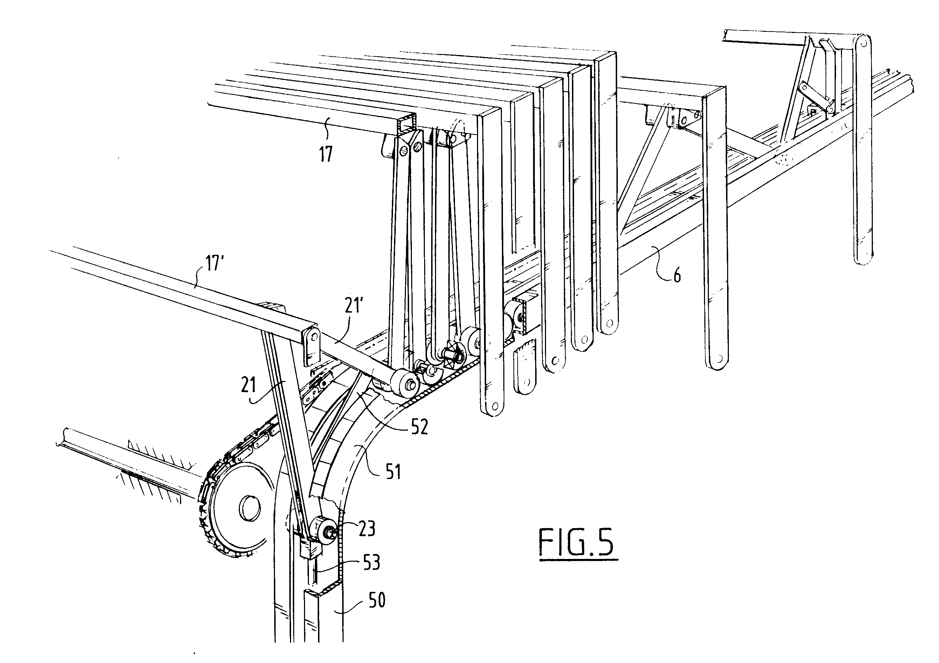

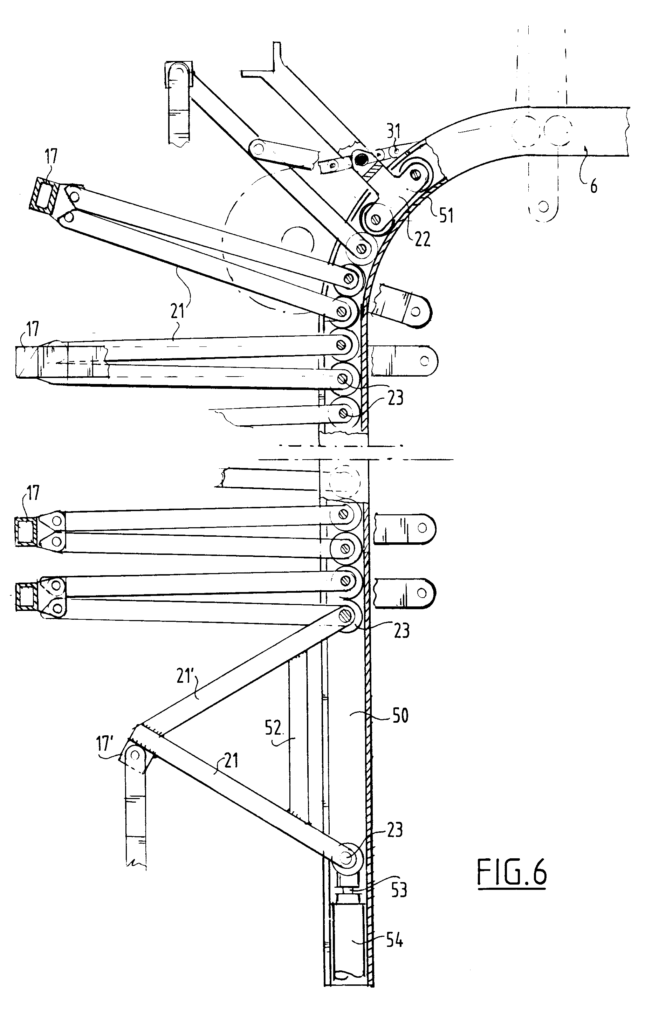

Figures 5 and 6 show an alternative embodiment, wherein the same components are designated with the same reference numerals.

In this embodiment the guide rail is elongated at one end with a vertical part 50 which is joined to the horizontal part 6 via a continuous, curved portion 51. The vertically extending part 50 may be situated at the front or rear of the rail 6, and preferably on the forward side of the panel 2 of the trailer shown in figure 1.

The vertical part 50 serves to accommodate all the moving carriages 22 of the pivoting arms 21 to which the cross beams 17 are attached. As is shown in the preceding embodiment, each cross beam 17 is supported by in each case a pair of pivoting arms which can be guided by means of travel wheels 23 in the guide rail 6 and 50.

The outermost cross beam 17' close to the front of the loading floor 1 is supported on two fixed arms 21' which in the embodiment according to figures 5 and 6 are held apart permanently at a fixed angle by a cross connection 52. Due to this cross connection 52 the travel wheels 23 of both arms 21 remain located in straddling position on either side of the continuous curved part 51 which furthers the smooth transition of the carriages with arms 21 coupled thereto and the cross beams 17.

The arm 21'' is connected at the end remote from the cross beam 17' to the end of a piston rod 53 of a cylinder 54. The cylinder 54 is supported at the bottom end of the guide rail 50 by means of a pivot connection.

The cylinder 54 is preferably embodied as a gas spring which can exert a resilient force such that the total weight of the folded pivot system and the sheeting 10 hanging thereon can be absorbed. By driving the last or penultimate carriage 22, as shown in figure 4, by means of the drive chain 31, folding up and unfolding of the pivot system with cover sheeting 10 can be realized. The gas spring 54 herein ensures retracting or pushing away of the carriages 22 with travel wheels 23 along the guide rail 50 and past the arcuate portion 51.

Instead of a gas spring it is likewise possible to employ another compensating means such as a coil spring in the form of a spiral spring, or for instance a counter-weight connected to the bottom carriage 23 via a lever.

The construction hereof will be apparent to a person skilled in the art. Although as regards construction and cost price a gas spring is attractive, the stroke of such a gas spring is often small. It would then be attractive to apparently enlarge the stroke of the gas spring through a pulley construction. For this purpose an end of the cable is connected to the shaft of the bottom wheel 23. This cable extends upward from the shaft, is trained over a fixed pulley, then extends over a pulley fixed to the piston of the gas spring and extends further upward to a fixed point. The cylinder of the gas spring is herein likewise connected to a fixed point.

Instead of the construction outlined above which doubles the stroke of the gas spring, it is also possible to employ a construction quadrupling the stroke of the spring.

With the construction shown in figure 5 and 6 it is therefore possible to carry the entire top cover to the front of the panel 2 and therefore to clear the whole loading bed 1 of the cover part 10.

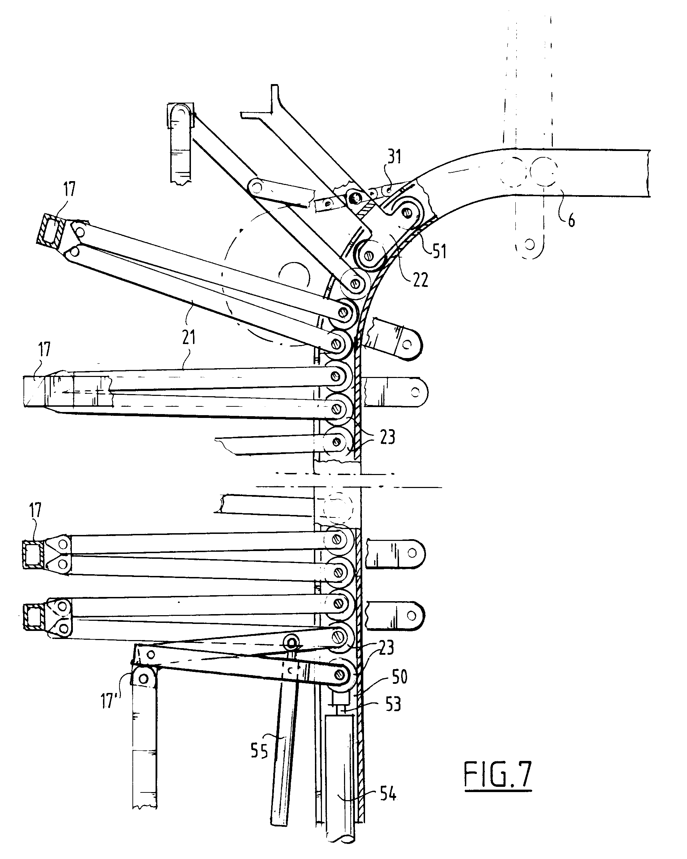

Figure 7 shows an embodiment wherein the fixed arms 21 of figure 5 and 6 are not held spread by a fixed cross connection 52 but by an extra gas spring 55. To this end the cylinder of the gas spring 55 is attached pivotally to the one arm and the piston rod to the other arm of the outermost cross beam 17'. The spring constant of the gas spring 55 is smaller than that of gas spring 54 such that, as the weight increases during folding up of the top cover part 10, the gas spring 55 compresses sooner than spring 54. In this manner the space normally required for the first pivoting arm system 21 according to figure 6 is considerably reduced, which can be used to fold up a longer cover sheeting 10.

Instead of a gas spring 55 it is of course possible to use a spiral spring the axis of which extends parallel along the cross beam 17.

Both arms of the spiral spring are then connected to the respective arms 21.

The method of operating the cover part 10 is otherwise similar to that according to the preceding figures.

Different embodiments are possible within the scope of the invention.

It is for instance obviously possible to embody the horizontal cover part 11 with other than the U-shaped cross beams 18, 19, and to turn the longitudinal beam 6 for instance through a quarter-turn and guide the ends of the beam 17 directly into the U-profile portions.

Another possibility is to give the pivot construction 21 the dual form of a folding link system ("Neurenbergerschere") wherein a pressure cylinder can be arranged in one of the folding link elements to obtain the desired sliding in and out of the horizontal cover part 11.

It is also possible to move the cover part (which as in canvas can form one whole with the side parts of the vehicle) open and closed manually (and therefore without motor and circulating flexible element) by means of for instance a push-pull rod or rope with hauling block or a like construction.

It is necessary in this case to lessen the pressure force of the weight-compensating system of the vertical part such that this is only compressed by the weight of the folded pivot system with cover part (optionally with side parts).

In order now to carry the pivot system lying in vertical position back into horizontal position via the bend portion an additional force must be applied in the weight-compensating system. This can be carried out by adding an element which mechanically pulls out or pushes in the for example gas-, pressure- or draw-spring along with it (a tackle or winch system or a chain transmission or other means).

In the case of a gas spring or air cylinder as weight-compensating element, the additional force may also be obtained by increasing the pressure in this cylinder. This can be done for instance by making use of the pneumatic cylinder present on any vehicle or an air or gas cylinder.

## Claims

1. Foldable hood for a loading bed (1), for example on goods vehicles, trailers and the like, which hood comprises at least two rows of posts (3) arranged at the side of the bed (1), a longitudinal beam (6) connecting the top ends of the posts in a row, cross beams (17) extending close to the level of the longitudinal beams (6) and a layer of pliable material (10) stretched over the cross and longitudinal beams as well as the posts, said pliable layer being provided with a first horizontal cover portion (11) extending over the cross and longitudinal beams, and one or more vertical side parts (12) extending along the posts, said cover part (11) being fixed to the cross beams (17) , wherein between each pair of adjacent cross beams (17) at least one pair of pivoting arms (21) is arranged, the pivot (25) of which is supported by a carrier (22) slidably mounted on a guide rail (27) of said longitudinal beam (6), and wherein one end of said guide rail for the carriages is elongated with a vertically downwardly extending portion (50), **characterized in that** a displaceable stop (53) is arranged along the elongated vertical portion (50), said stop being provided with a weight compensating system (54).

2. Foldable hood as claimed in claim 1, **characterized by** means (54) for temporarily applying an upward directed force onto the system compensating the weight.

3. Foldable hood as claimed in claim 1 and 2, **characterized in that** the stop (53) is arranged on a cylinder rod of a cylinder (54).

4. Foldable hood as claimed in claim 3, **characterized in that** the stop (53) is connected to the cylinder rod via a system of ropes and pulleys.

5. Foldable hood as claimed in claim 3 or 4, **characterized in that** the cylinder is a gas spring (54).

6. Foldable hood as claimed in claims 1-5, **characterized in that** at least the outermost cross beam (17') is supported on a pair of arms (21, 21') held apart by a cross connection (52) extending along the rail (6, 50).

7. Foldable hood as claimed in claim 6, **characterized in that** the cross connection is a gas spring (55) or a spiral spring.

8. Foldable hood as claimed in any of the previous claims 1-7, **characterized in that** each cross beam is provided with a downward oriented support (10) for fastening of a vertically oriented edge portion (11) of the cover part (10).

9. Foldable hood as claimed in any of the claims 1-8, **characterized in that** for the slidable guiding of the carriages (22) along the rail an endless flexible member (31), for instance a link chain, is used which can be driven by a motor (35).

10. Foldable hood as claimed in claim 9, **characterized in that** a reversing wheel (32) of each of the two flexible endless members (31) accommodated in the longitudinal beams (6) is driven by said motor (35) with transmission (34).

11. Motor (35) with transmission (34) for driving a common shaft (33) of two wheels (32) of a pair of endless flexible members for a foldable hood as claimed in any of the foregoing claims.

## Patentansprüche

1. Faltbares Verdeck für eine Ladefläche (1), z.B. auf Lastkraftwägen, Anhängerwägen und ähnlichem, wobei das Verdeck mindestens zwei Reihen Pfosten (3) umfaßt, welche an der Seite der Ladefläche angeordnet sind, einen Längsbalken (6), welcher die oberen Enden der Pfosten in einer Reihe verbindet, Querbalken (17), welche sich nahe der Höhe des Längsbalkens (6) erstrecken und einer Lage faltbaren Materials (10), welche über die Quer- und Längsbalken sowie über die Pfosten gezogen ist, wobei die faltbare Lage mit einem ersten horizontalen Abdeckungsabschnitt (11) versehen ist, welcher sich über die Quer- und Längsbalken erstreckt, und mit einem oder mehreren vertikalen Seitenteilen (12), welche sich entlang der Pfosten erstrecken, wobei der Abdeckungsteil (11) an den Querbalken (17) befestigt ist, und in welchem zwischem jedem Paar benachbarter Querbalken (17) mindestens ein Paar Drehbalken (21) angeordnet ist, der Drehpunkt (25) derselben ist in einem Schlitten (22) gelagert, welcher verschiebbar auf einer Führungsschiene (27) des Längsbalkens (6) montiert ist, und in welchem ein Ende der Führungsschiene für die Schlitten mit einem vertikal abwärtsverlaufendem Abschnitt (50) verlängert ist, dadurch gekennzeichnet, daß ein verschiebbarer Anschlag (53) an dem verlängerten vertikalen Abschnitt (50) angeordnet ist, wobei dieser Anschlag mit einem System zur Gewichtskompensation (54) versehen ist.

2. Faltbares Verdeck nach Anspruch 1, gekennzeichnet durch Einrichtungen (54) zur vorübergehenden Aufbringung einer abwärtsgerichteten Kraft auf das System zur Gewichtskompensation.

3. Faltbares Verdeck nach Anspruch 1 und 2, dadurch gekennzeichnet, daß der Anschlag (53) in einer Zylinderstange eines Zylinders (54) angeordnet ist.

4. Faltbares Verdeck nach Anspruch 3, dadurch gekennzeichnet, daß der Anschlag (53) mit der Zylinderstange über ein System von Seilen und Rollen verbunden ist.

5. Faltbares Verdeck nach Anspruch 3 oder 4, dadurch gekennzeichnet, daß der Zylinder eine Gasfeder (54) ist.

6. Faltbares Verdeck nach Anspruch 1-5, dadurch gekennzeichnet, daß sich wenigstens der äußerste Querbalken (17') auf einem Paar von Ärmen (21, 21') abstützt, welche durch eine sich entlang der Schiene (6, 50) erstreckende Querverbindung (52) getrennt gehalten werden.

7. Faltbares Verdeck nach Anspruch 6, dadurch gekennzeichnet, daß die Querverbindung eine Gasfeder (55) oder eine Spiralfeder ist.

8. Faltbares Verdeck nach einem der vorangegangenen Ansprüche 1-7, dadurch gekennzeichnet, daß jeder Querbalken mit einer abwärtsgerichteten Stütze (10) versehen ist, um einen vertikal ausgerichteten Kantenabschnitt (11) des Abdeckungsteils (10) zu befestigen.

9. Faltbares Verdeck nach einem der Ansprüche 1-8, dadurch gekennzeichnet, daß für die verschiebbare Führung der Schlitten (22) entlang der Schiene ein endloses, flexibles Element (31), z.B. eine Gelenkkette verwendet wird, welches durch einen Motor bewegt werden kann.

10. Faltbares Verdeck nach Anspruch 9, dadurch gekennzeichnet, daß ein Steuerungsrad (32) eines jeden der zwei flexibles, endlosen Elemente (31), welche in dem Längsbalken (6) untergebracht sind, mit dem Motor (35) über eine Transmission (34) angetrieben wird.

11. Motor (35) mit Transmission (34), um die gemeinsame Achse der zwei Räder (32) eines Paares endloser, flexibler Elemente für ein faltbares Verdeck nach einem der vorangegangenen Ansprüche zu bewegen.

## Revendications

1. Capote pliante destinée à une plate-forme de chargement (1), par exemple sur des véhicules de transport de marchandises, des remorques et analogues, la capote comprenant au moins deux rangées de montants (3) placés sur le côté de la plate-forme (1), une poutre longitudinale (6) raccordant les extrémité supérieures des montants d'une rangée, des traverses (17) placées à proximité du niveau des poutres longitudinales (6) et une couche d'un matériau (10) qui peut être plié et qui est tendu sur les poutres transversales et les poutres longitudinales ainsi que sur les montants, la couche de matière qui peut être pliée ayant une première partie horizontale de couverture (11) placée sur les traverses et les poutres longitudinales, et un ou plusieurs parties latérales verticales (12) disposées le long des montants, la partie (11) de couverture étant fixée aux traverses (17), et, entre chaque paire de traverses adjacentes (17), une paire de bras pivotants au moins (21) est montée afin que le pivot correspondant (25) soit supporté par un chariot (22) monté afin qu'il coulisse sur un rail de guidage (27) de la poutre longitudinale (6), une extrémité du rail de guidage des chariots étant allongée avec une partie descendant verticalement (50), caractérisée en ce qu'un organe mobile d'arrêt (53) est placé le long de la partie verticale allongée (50), l'organe d'arrêt ayant un ensemble (54) de compensation de poids.

2. Capote pliante selon la revendication 1, caractérisée par un dispositif (54) destiné à appliquer temporairement une force ascendante à l'ensemble de compensation de poids.

3. Capote pliante selon la revendication 1 et 2, caractérisée en ce que l'organe d'arrêt (53) est disposé sur une tige d'un vérin (54).

4. Capote pliante selon la revendication 3, caractérisée en ce que l'organe d'arrêt (53) est raccordé à la tige du vérin par un ensemble à câble et poulie.

5. Capote pliante selon la revendication 3 ou 4, caractérisée en ce que le vérin est un ressort à gaz (54).

6. Capote pliante selon les revendications 1 à 5, caractérisée en ce que la traverse la plus externe au moins (17') est supportée sur une paire de bras (21, 21') maintenus à distance par un raccord transversal (52) placé le long du rail (6, 50).

7. Capote pliante selon la revendication 6, caractérisée en ce que le raccord transversal est un ressort à gaz (55) ou un ressort spiralé.

8. Capote pliante selon l'une quelconque des revendications précédentes 1 à 7, caractérisée en ce que chaque traverse a un support (10) orienté vers le bas et destiné à fixer une partie de bord (11) orientée verticalement de la partie de couverture (10).

9. Capote pliante selon l'une des revendications 1 à 8, caractérisée en ce que le guidage coulissant des chariots (22) le long du rail est assuré par un organe souple sans fin (31), par exemple une chaîne à maillons, qui peut être entraîné par un moteur (35).

10. Capote pliante selon la revendication 9, caractérisée en ce qu'une roue (32) d'inversion de chacun des deux organes souples sans fin (31) logés dans les poutres longitudinales (6) est entraînée par un moteur (35) muni d'une transmission (34).

11. Moteur (35) muni d'une transmission (34), destiné à entraîner un arbre commun (33) de deux roues (32) d'une paire d'organes souples sans fin destinés à une capote pliante selon l'une quelconque des revendications précédentes.
